(19) **Europäisches Patentamt**

**European Patent Office**

**Office européen des brevets**

(11) **EP 1 575 702 B1**

(12) **EUROPEAN PATENT SPECIFICATION**

(45) Date of publication and mention
of the grant of the patent:
**03.05.2006 Bulletin 2006/18**

(51) Int Cl.:
***B01J 8/42*** *(2006.01)*   ***B01J 19/12*** *(2006.01)*

(21) Application number: **03780044.8**

(22) Date of filing: **25.11.2003**

(86) International application number:
**PCT/EP2003/013209**

(87) International publication number:
**WO 2004/056468 (08.07.2004 Gazette 2004/28)**

(54) **TREATMENT OF GRANULAR SOLIDS IN A FLUIDIZED BED WITH MICROWAVES**

MIKROWELLENBEHANDLUNG VON GRANULATEN IN EINEM WIRBELBETT

TRAITEMENT DE SOLIDES GRANULAIRES DANS UN LIT FLUIDISE AU MOYEN DE MICRO-ONDES

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.12.2002 DE 10260743**

(43) Date of publication of application:
**21.09.2005 Bulletin 2005/38**

(73) Proprietor: **Outokumpu Technology Oy**
**02200 Espoo (FI)**

(72) Inventors:
• **STRÖDER, Michael**
 **61267 Neu-Anspach (DE)**
• **ANASTASIJEVIC, Nikola**
 **63674 Altenstadt (DE)**
• **GERDES, Thorsten**
 **95448 Eckersdorf (DE)**
• **WILLERT-PORADA, Monika**
 **95448 Bayreuth (DE)**

(74) Representative: **KEIL & SCHAAFHAUSEN**
**Patentanwälte**
**Cronstettenstrasse 66**
**60322 Frankfurt am Main (DE)**

(56) References cited:
 **EP-A- 0 403 820**   **US-A- 5 972 302**

**Description**

**Technical Field**

This invention relates to a method for the thermal treatment of granular solids in a fluidized bed which is located in a fluidized-bed reactor, wherein microwave radiation is fed into the fluidized-bed reactor through at least one wave guide, and to a corresponding plant.

There are several possibilities for coupling a microwave source to fluidized-bed reactors. These include for instance an open wave guide, a slot antenna, a coupling loop, a diaphragm, a coaxial antenna filled with gas or another dielectric, or a wave guide occluded with a microwave-transparent substance (window). The type of decoupling the microwaves from the feed conduit can be effected in different ways.

Theoretically, microwave energy can be transported in wave guides free of loss. The wave guide cross-section is obtained as a logical development of an electric oscillating circuit comprising coil and capacitor towards very high frequencies. Theoretically, such oscillating circuit can likewise be operated free of loss. In the case of a substantial increase of the resonance frequency, the coil of an electric oscillating circuit becomes half a winding, which corresponds to the one side of the wave guide cross-section. The capacitor becomes a plate capacitor, which likewise corresponds to two sides of the wave guide cross-section. In reality, an oscillating circuit loses energy due to the ohmic resistance in coil and capacitor.

The wave guide loses energy due to the ohmic resistance in the wave guide wall.

Energy can be branched off from an electric oscillating circuit by coupling a second oscillating circuit thereto, which withdraws energy from the first one. Similarly, by flanging a second wave guide to a first wave guide energy can be decoupled from the same (wave guide transition). When the first wave guide is shut off behind the coupling point by a shorting plunger, the entire energy can even be diverted to the second wave guide.

The microwave energy in a wave guide is enclosed by the electrically conductive walls. In the walls, wall currents are flowing, and in the wave guide cross-section an electromagnetic field exists, whose field strength can be several 10 KV per meter. When an electrically conductive antenna rod is put into the wave guide, the same can directly dissipate the potential difference of the electromagnetic field and with a suitable shape also emit the same again at its end (antenna or probe decoupling). An antenna rod which enters the wave guide through an opening and contacts the wave guide wall at another point can still directly receive wall currents and likewise emit the same at its end. When the wave guide is shut off by a shorting plunger behind the antenna coupling, the entire energy can be diverted from the wave guide into the antenna in this case as well.

When the field lines of the wall currents in wave guides are interrupted by slots, microwave energy emerges from the wave guide through these slots (slot decoupling), as the energy cannot flow on in the wall. The wall currents in a rectangular wave guide flow parallel to the center line on the middle of the broad side of the wave guide, and transverse to the center line on the middle of the narrow side of the wave guide. Transverse slots in the broad side and longitudinal slots in the narrow side therefore decouple microwave radiation from wave guides.

Microwave radiation can be conducted in electrically conductive hollow sections of all kinds of geometries, as long as their dimensions do not fall below certain minimum values. The exact calculation of the resonance conditions involves rather complex mathematics, as the Maxwell equations (unsteady, nonlinear differential equations) must ultimately be solved with the corresponding marginal conditions. In the case of a rectangular or round wave guide cross-section, however, the equations can be simplified to such an extent that they can be solved analytically and problems as regards the design of wave guides become clearer and are easier to solve. Therefore, and due to the relatively easy production, only rectangular wave guides or round wave guides are used industrially, which are also preferably used in accordance with the invention. The chiefly used rectangular wave guides are standardized in the Anglo-Saxon literature. These standard dimensions were adopted in Germany, which is why odd dimensions appear in part. In general, all industrial microwave sources of the frequency 2.45 GHz are equipped with a rectangular wave guide of the type R26, which has a cross-section of 43 x 86 mm. In wave guides, different oscillation states exist: In the transversal electric mode (TE mode), the electric field component lies transverse to the wave guide direction and the magnetic component lies in wave guide direction. In the transversal magnetic mode (TM mode), the magnetic field component lies transverse to the wave guide direction and the electric component lies in wave guide direction. Both oscillation states can appear in all directions in space with different mode numbers (e.g. TE-1-1, TM-2-0).

A method for the thermal treatment of granular solids is known from US 5,972,302, wherein sulfidic ore is subjected to an oxidation supported by microwaves. This method is chiefly concerned with the calcination of pyrite in a fluidized bed, wherein the microwaves introduced into the fluidized bed promote the formation of hematite and elementary sulfur and suppress the formation of $SO_2$.

There is employed a stationary fluidized bed which is directly irradiated by the microwave source disposed directly above the same. The microwave source or the entrance point of the microwaves necessarily gets in contact with the gases, vapors and dusts ascending from the fluidized bed.

EP 0 403 820 B1 describes a method for drying substances in a fluidized bed, wherein the microwave source is disposed outside the fluidized bed and the microwaves are introduced into the fluidized bed by means of a wave guide. There are frequently reflections of microwave radiation at the solids to be heated, whereby the efficiency is reduced and the microwave source is possibly damaged. In the case of open microwave wave guides, there are also dust deposits in the wave guide, which absorb part of the microwave radiation and can damage the microwave source. This can be avoided by microwave-transparent windows, which occlude the wave guide between the reactor and the microwave source. In this case, however, deposits on the window lead to an impairment of the microwave radiation.

**Description of the Invention**

It is therefore the object underlying the invention to make the feeding of microwaves into a stationary or circulating fluidized bed more efficient and protect the microwave source in a better way.

In accordance with the invention, this object is substantially solved in a method as mentioned above in that the irradiation angle of the microwaves is inclined by an angle of 10° to 50°, particularly preferably, however, between 10° and 20°, with respect to the principal axis of the fluidized-bed reactor. In accordance with the invention, the irradiation angle α can also be variably adjustable.

Electromagnetic waves are transverse waves, i.e. have a polarizing direction, the direction of the electric field strength being parallel to the transmitter dipole, the direction of the magnetic excitation vertical thereto. To introduce as much microwave energy as possible into the substances to be excited, the degree of reflection must be minimized. The degree of reflection is known to depend on the angle of incidence, the refractive index of the substance to be excited, and on the polarizing direction. As the substances to be excited in the fluidized bed are ores, recycling substances or waste substances, which either unevenly lie on a grid in the fluidized bed or circulate with introduced gas in the reactor space, there is no distinct surface on which the microwave rays impinge. When introducing microwaves from a plurality of microwave sources, the reflected microwaves form standing waves of multiple modes in the reactor space. These modes are also obtained in the case of microwaves from only one microwave source, as the microwaves are reflected at the wall of the reactor in various directions. These microwaves reinforce each other by increasing the amplitude in some regions, and cancel each other again in other regions. This produces a multitude of standing waves. It was surprisingly found out that in particular with an irradiation angle of the microwaves of 10 to 20 degrees with respect to the principal axis of the reactor the smallest reflection and thus the highest efficiency can be achieved. By principal axis of the reactor there is in particular meant the vertical axis of symmetry. The reflection onto the microwave source also is smallest at the same time. For protection, the microwave source also is disposed outside the stationary or circulating fluidized bed, the microwave radiation being fed into the fluidized-bed reactor through at least one wave guide.

In a particular preferred embodiment, a gas stream is additionally fed into the fluidized-bed reactor through the wave guide, which gas stream is also used for microwave irradiation. Coupling the microwave radiation and at the same time the secondary stream under an angle of 10° up to in particular 20° into the fluidized-bed reactor turned out to be particularly favorable, as in this angular range the returning microwave performance is minimal on the one hand and on the other hand no dust deposits are observed in the wave guide. Hence, the heating efficiency and the operational safety are highest in this range. In dependence on the properties of the fluidized bed, however, irradiation angles between 20° and 50° may be expedient in terms of apparatus. By means of the additional continuous gas stream from the wave guide it is reliably avoided that dust or process gases enter the wave guide, spread up to the microwave source and damage the same or form solid deposits in the wave guide. In accordance with the invention, microwave-transparent windows in the wave guide for shielding the microwave source, as they are commonly used in the prior art, can therefore be omitted. The same involve the problem that deposits of dust or other solids on the window can impair and partly absorb the microwave radiation. Therefore, the open wave guides in accordance with the invention are particularly advantageous.

An improvement of the method is achieved when the gas stream introduced through the wave guide contains gases which react with the fluidized bed and in the case of a circulating fluidized-bed reactor can even be utilized for an additional fluidization of the fluidized bed. Thus, part of the gas which so far has been introduced into the fluidized bed through other supply conduits is used for dedusting the wave guide. As a result, providing neutral purge gas can also be omitted.

Another improvement is obtained in accordance with the invention when the gas stream introduced through the wave guide has a temperature difference with respect to the gases and solids present in the fluidized-bed reactor. In this way, additional heat can specifically be introduced into the fluidized bed or the fluidized bed can be cooled, depending on the desired effect.

The thermal treatment can not only be effected in a stationary, but also in a circulating fluidized bed, wherein the solids circulate continuously between a fluidized-bed reactor, a solids separator connected with the upper region of the fluidized-bed reactor and a return conduit connecting the solids separator with the lower region of the fluidized-bed reactor. Usually, the amount of solids circulating per hour is at least three times the amount of solids present in the fluidized-bed reactor.

Another advantage is obtained in that solid deposits in the wave guide are avoided by the continuous gas stream through the wave guide. These solid deposits change the cross-section of the wave guide in an undesired way and absorb part of the microwave energy which was designed for the solids in the fluidized bed. Due to the absorption of energy in the wave guide, the same is heated very much, whereby the material is subject to a strong thermal wear. In addition, solid deposits in the wave guide effect undesired feedbacks to the microwave source.

In the case of a circulating fluidized bed an improvement of the previous method is obtained when the microwave source is combined with the secondary gassing of the ring conduit. The microwave radiation is introduced into the reactor under the preferred irradiation angle, and at the same time the wave guide is used for secondary gassing.

Suitable microwave sources, i.e. sources for the electromagnetic waves, include e.g. a magnetron or a klystron. Furthermore, high-frequency generators with corresponding coils or power transistors can be used. The frequencies of the electromagnetic waves proceeding from the microwave source usually lie in the range from 300 MHz to 30 GHz. Preferably, the ISM frequencies 435 MHz, 915 MHz and 2.45 GHz are used. Expediently, the optimum frequencies are determined for each application in a trial operation.

In accordance with the invention, the wave guide wholly or largely consists of electrically conductive material, e.g. copper. The length of the wave guide lies in the range from 0.1 to 10 m. The wave guide may be straight or curved. There are preferably used sections of round or rectangular cross-section, the dimensions being in particular adjusted to the frequency used.

The temperatures in the fluidized bed lie for instance in the range from 150 to 1200°C, and it may be recommended to introduce additional heat into the fluidized bed, e.g. through indirect heat exchange. For temperature measurement in the fluidized bed, insulated sensing elements, radiation pyrometers or fiber-optic sensors can be used.

In accordance with the invention, the gas velocities in the wave guide are adjusted such that the Particle-Froude-Numbers in the wave guide lie in the range between 0.1 and 100. The Particle-Froude-Numbers are defined as follows:

$$Fr_p = \frac{u}{\sqrt{\frac{(\rho_s - \rho_f)}{\rho_f} * d_p * g}}$$

with

u = effective velocity of the gas flow in m/s

$\rho$s = density of the solid particles or process gases penetrating into the wave guide in kg/m$^3$

$\rho$f = effective density of the purge gas in the wave guide in kg/m$^3$

dp = mean diameter in m of the particles of the reactor inventory (or the particles formed) during operation of the reactor

g = gravitational constant in m/s$^2$.

To prevent solid particles or generated process gases from the reactor from penetrating into the wave guide, gas serving as purge gas flows through the wave guide. Solid particles can for instance be dust particles present in the reactor or also the treated solids. Process gases are obtained in the processes which take place in the reactor. By specifying certain Particle-Froude-Numbers, the density ratio of the entering solid particles or process gases to the purge gas is considered in accordance with the invention when adjusting the gas velocities, which ratio, apart from the velocity of the purge gas stream, is decisive for the question whether or not the purge gas stream can entrain the entering particles. Substances can thereby be prevented from penetrating into the wave guide. For most applications, a Particle-Froude-Number between 2 and 30 is preferred.

The granular solids to be treated by the method in accordance with the invention can for instance be ores and in particular sulfidic ores, which are prepared e.g. for recovering gold, copper or zinc. Furthermore, recycling substances, e.g. zinc-containing processing oxide or waste substances, can be subjected to the thermal treatment in the fluidized bed. If sulfidic ores, such as e.g. auriferous arsenopyrite, are subjected to the method, the sulfide is converted to oxide, and with a suitable procedure there is preferably formed elementary sulfur and only small amounts of $SO_2$. The method of the invention favorably loosens the structure of the ore, so that the subsequent gold leaching leads to improved yields. The arsenic iron sulfide (FeAsS) preferably formed by the thermal treatment can easily be disposed of. Expediently, the solids to be treated at least partly absorb the electromagnetic radiation used and thus heat the bed. It was surprisingly found out that in particular material treated at high field strengths can be leached more easily. Frequently, other technical advantages can be realized as well, such as reduced retention times or a decrease of the required process temperatures.

In accordance with the invention, the solids can also be passed through at least two succeeding fluidized-bed reactors, for instance two turbulence chambers separated from each other by means of weirs or partitions, in which the stationary fluidized beds are disposed and into which electromagnetic waves are fed, which are coming from wave guides. The solids can move as migrating fluidized-bed from one fluidized-bed reactor into the adjacent fluidized-bed reactor. One variant consists in that between two turbulence chambers of the two adjacent fluidized-bed reactors an intermediate chamber is disposed, which is connected with the turbulence chambers and contains a fluidized bed of granular solids, the intermediate chamber having no wave guide associated thereto. Another variant of the method of the invention consists in that for separating the two turbulence chambers a partition is used, which has the opening in the bottom region.

Particularly advantageously, the operating conditions, in particular temperature, composition of the fluidizing gas, energy input and/or fluidization velocity, can be predetermined differently for each of a plurality of fluidized-bed reactors. In the case of one fluidized bed or a plurality of succeeding fluidized beds, the solids thus can for instance first be passed through a preheating chamber upstream of the first fluidized bed. Furthermore, downstream of the last fluidized bed serving the thermal treatment a cooling chamber can be provided for cooling the solid product.

Furthermore, the present invention relates to a plant in particular for performing the above-described method for the thermal treatment of granular solids in a fluidized bed. A plant in accordance with the invention includes a fluidized-bed reactor, a microwave source disposed outside the fluidized-bed reactor, and a wave guide for feeding the microwave radiation into the fluidized-bed reactor, the wave guide being inclined by an angle of 10° to 50°, in particular 10° to 20°, with respect to the principal axis of the fluidized-bed reactor.

Developments, advantages and possible applications of the present invention can also be taken from the following description of examples and from the drawing. All described and/or illustrated features per se or in any combination belong to the subject-matter of the invention, independent of their inclusion in the claims or their back-reference.

**Brief Description of the Drawings**

Fig. 1 shows the thermal treatment of granular solids in a stationary fluidized bed in a schematic representation;

Fig. 2 shows a method variant with a circulating fluidized bed; and

Figs. 3, 4, 5 show method variants with a plurality of stationary fluidized beds.

**Detailed Description of the Preferred Embodiments**

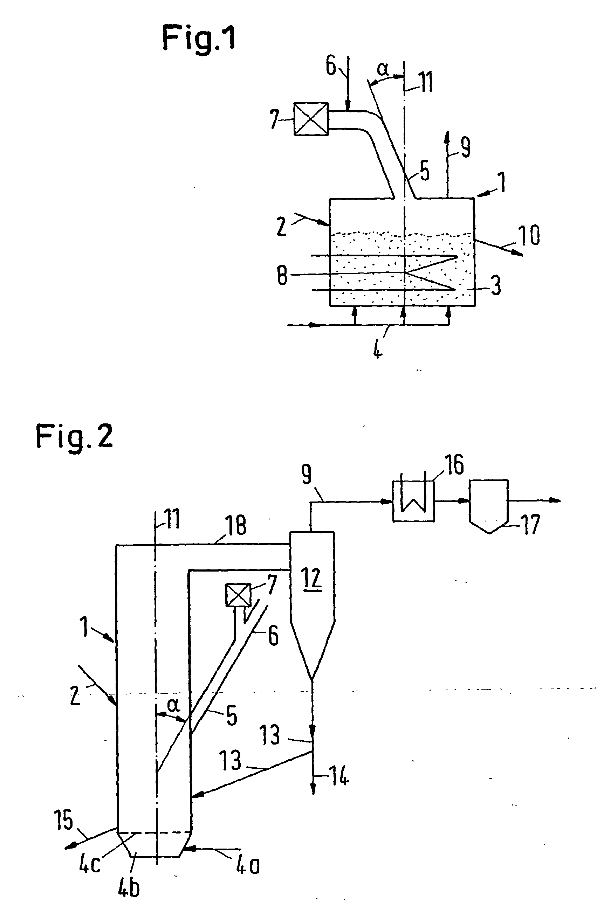

Fig. 1 shows a plant for performing the method in accordance with the invention for the thermal treatment of granular solids in a stationary fluidized layer 3 which is also referred to as fluidized bed.

The plant includes a fluidized-bed reactor 1, into which granular solids to be treated are introduced through a conduit 2. In a chamber, the solids form a stationary fluidized bed 3 which is traversed by a fluidizing gas, e.g. air. For this purpose, the fluidizing gas is passed from below through a gas distributor 4 into the fluidized bed 3. In the upper region of the fluidized-bed reactor 1, an open wave guide 5, which leads to a microwave source 7, is connected to the chamber with the stationary fluidized bed 3. The wave guide 5 is inclined by an angle $\alpha$ of 10° to 20° with respect to the vertical principal axis 11 of the fluidized-bed reactor 1. The electromagnetic waves proceeding from the microwave source 7 are passed through the wave guide 5 and fed into the chamber of the fluidized-bed reactor 1. They at least partly contribute to the heating of the fluidized bed 3. Furthermore, purge gas, e.g. air or nitrogen, is laterally fed into the wave guide 5 through a conduit 6, which purge gas flows on into the fluidized-bed reactor and prevents the ingress of dust or process gases from the chamber with the stationary fluidized bed 3 into the wave guide 5. In this way, the microwave source 7 is protected against being damaged, and at the same time microwave-absorbing soil deposits in the wave guide 5 are prevented without the open wave guide 5 having to be closed by a microwave-transparent window. By means of the angle of inclination, reflections of the microwaves fed into the fluidized-bed reactor 1 are reduced considerably, so that the electromagnetic radiation can better be absorbed by the solids and the efficiency of the plant and of the method is increased.

If necessary for the process, the stationary fluidized bed 3 can additionally be heated by a heat exchanger 8 disposed in the fluidized bed 3. Gases and vapors formed leave the chamber of the fluidized-bed reactor 1 through a conduit 9 and are supplied to a non-illustrated cooling and dedusting known per se. The treated granular solids are withdrawn from the fluidized-bed reactor 1 through the discharge conduit 10.

In Fig. 2, the fluidized-bed reactor 1 constitutes a reactor with a circulating fluidized bed (fluidized layer). The solids to be treated are introduced into the fluidized-bed reactor 1 via conduit 2 and entrained by fluidizing gas introduced into the fluidized-bed reactor 1, whereby the circulating fluidized layer is formed. The solids then are at least partly discharged from the fluidized-bed reactor 1 along with the gas through a duct 18 and introduced into a solids separator 12. The solids separated therein are at least partly recirculated through a return conduit 13 into the lower region of the circulating fluidized bed of the fluidized-bed reactor 1. Part of the solids can also be discharged through the discharge conduit 14. Coarse solids, which are deposited at the bottom of the fluidized-bed reactor 1, can be removed from the reactor 1 through an outlet conduit 15. The fluidizing gas for forming the circulating fluidized bed, e.g. air, is supplied to the fluidized-bed reactor 1 through a conduit 4a and first gets into a distribution chamber 4b, before it flows into the fluidized-bed reactor 1 through a grid 4c, entrains the introduced, in particular fine-grained solids and forms a circulating fluidized layer as fluidized bed.

A wave guide 5 connects a microwave source 7 with the chamber of the fluidized-bed reactor 1, through which wave guide microwaves are fed into the microwave reactor 1 for heating the granular solids as in the plant in accordance with Fig. 1. In addition, purge gas from a secondary gassing 6 flows through the wave guide 5, in order to avoid the ingress of dirt as well as deposits in the wave guide 5. The wave guide 5 is inclined by an angle α of 10° to 20° with respect to the principal axis 11 of the fluidized-bed reactor 1, in order to minimize reflections of the irradiated microwaves at the solids and in conjunction with the gas stream avoid dust deposits in the wave guide 5. The microwave source 7 is disposed behind a bend of the wave guide 5, in which the same is bent with respect to its longitudinal axis by about the angle α. The secondary gassing 6 connected to a non-illustrated ring conduit substantially axially meets the wave guide 5 in this bend.

In the present case as well, the inner region of the chamber can again be provided with one or more heat exchangers for additionally heating the granular solids, which was not represented in Fig. 2 for a better clarity.

Dust-laden gas leaves the solids separator 12 through conduit 9 and is first cooled in a waste heat boiler 16, before it is passed through a dedusting 17. Separated dust can either be removed from the process or be recirculated to the chamber of the fluidized-bed reactor 1 through a non-illustrated conduit.

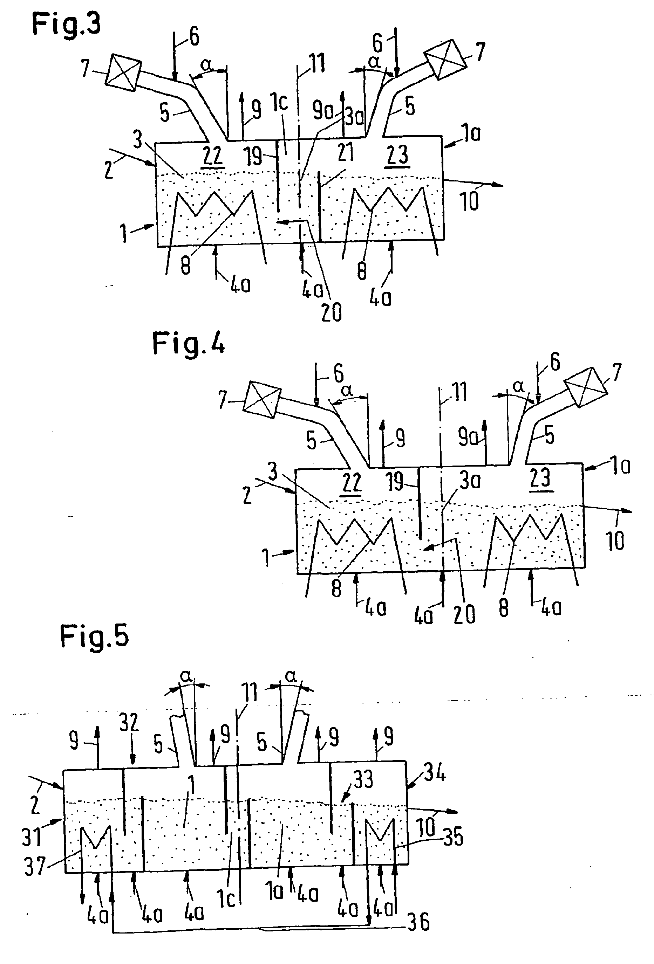

As shown in Fig. 3, two stationary fluidized-bed reactors 1 and 1 a are arranged in series, an intermediate chamber 1 c being located between the chambers of the two reactors 1 and 1a. In all three chambers, the solids form a stationary fluidized bed 3, 3a, which is traversed by fluidizing gas. The fluidizing gas for each chamber is supplied through a separate conduit 4a. The granular solids to be treated enter the first fluidized-bed reactor 1 through conduit 2, and completely treated solids leave the second fluidized-bed reactor 1 a through the discharge conduit 10. From the upper region of the chamber of the first reactor 1 a first wall 19 extends downwards. However, it does not extend down to the ground, so that in the bottom region an opening 20 is left, through which solids from the first fluidized bed 3 can get into the fluidized bed 3a of the intermediate chamber 1c. The intermediate chamber 1 c extends up to a weir-like second wall 21, over which the solids from the fluidized bed 3a of the intermediate chamber 1c are moved into the chamber of the second fluidized-bed reactor 1 a. Corresponding to the plants as shown in Figs. 1 and 2, wave guides 5 with purge air conduits 6 and microwave sources 7 are each connected to the chambers of the two reactors 1 and 1 a, which wave guides are inclined by an angle α between 10° and 20° against the vertical principal axis 11. The principal axes of the reactors 1 and 1 a are each aligned vertically and disposed in parallel, so that in the drawing merely one principal axis is shown. The irradiation angle α in the first reactor 1 is different from the irradiation angle α in the second reactor 1a. This is in particular expedient when for instance microwaves of different frequencies are irradiated into the various chambers. In accordance with the present invention it may of course also be provided that the two irradiation angles α are equal for both reactors 1, 1 a. In the chambers of the reactors 1 and 1 a heat exchanging elements 8 may be arranged in addition.

The gas space 22 above the fluidized bed 3 of the first fluidized-bed reactor 1 is separated from the gas space 23, which belongs to the chamber of the second reactor 1a and the intermediate chamber 1 c, by the vertical wall 19. For the gas spaces 22, 23 separate gas outlet conduits 9 and 9a exist. As a result, different conditions can be maintained in the chambers of the reactors 1 and 1a, in particular different temperatures can exist or different fluidizing gases can be supplied through separate gas supply conduits 4a. Furthermore, the two microwave sources 7 can be designed differently and perform different functions. In particular, microwaves of different frequency or energy can be generated and be introduced through the wave guide 5.

As shown in Fig. 4, two stationary fluidized-bed reactors 1 and 1a without intermediate chamber are arranged directly succeeding each other, a partition 19 being disposed between the two. In the chambers of the two reactors 1, 1a the solids form a stationary fluidized bed 3, 3a, which is fluidized by fluidizing gas from a plurality of conduits 4a disposed one beside the other. The granular solids to be treated are supplied to the first fluidized-bed reactor 1 through conduit 2, and the treated solids leave the fluidized-bed reactor 1a through the discharge conduit 10. From the upper region of the chamber of the first reactor 1, a first wall 19 extends downwards, which does, however, not extend down to the ground, so that in the bottom region an opening 20 is left, through which solids from the first fluidized bed 3 can get into the fluidized bed 3a of the second fluidized-bed reactor 1 a. Waveguides 5, which are connected to the microwave sources 7, each extend to the two chambers of the reactors 1 and 1a. According to the principle described already in the previous embodiments, microwaves are fed into the two reactors 1, 1 a through these open wave guides, in order to heat the solids to be treated, which absorb the microwave radiation, and reach the necessary process temperatures. The wave guides 5 are again inclined by their respective irradiation angles α between 10° and 20° against the principal axes 11 of the two reactors 1, 1a. During the microwave irradiation, purge gas at the same time flows into the wave guides 5 through purge air conduits 6, in order to avoid deposits in said wave guides. In the chambers of the reactors 1 and 1 a, heat exchanging elements 8 may be arranged in addition.

The gas space 22 above the fluidized bed 3 of the first fluidized-bed reactor 1 is separated from the gas space 23, which belongs to the chamber of the second reactor 1a, by the vertical wall 19. There exist separate gas discharge conduits 9 and 9a. As a result, different conditions can be maintained in the various reactor chambers 1 and 1 a, in particular the temperatures or the gas phase composition can be different. Different fluidizing gases can also be supplied through the respective conduits 4a. Furthermore, the two microwave sources 7 can be designed differently and perform different functions.

In the arrangement as shown in Fig. 5, the solids to be treated, which are supplied via conduit 2, first enter an antechamber 31 and flow through a first intermediate chamber 32 into the first fluidized-bed reactor 1. The solids then are discharged from the same to flow through a second intermediate chamber 1 c into the second fluidized-bed reactor 1 a and finally through the third intermediate chamber 33 into a cooling chamber 34, before the treated and cooled solids are withdrawn through the discharge conduit 10. Wave guides 5 with associated non-illustrated microwave sources each open into the chambers of the fluidized-bed reactors 1 and 1 a, in order to feed microwaves into the reactors 1 and 1a according to the above-described principle. Here as well, the wave guides are inclined at an angle $\alpha$ of 10° to 20° with respect to the principal axis 11 of the fluidized-bed reactors 1, 1 a. All chambers include stationary fluidized beds, to which fluidizing gas is supplied through separate gas supply conduits 4a for each chamber. The exhaust gases are discharged through corresponding conduits 9.

In the cooling chamber 34, the fluidized bed includes a cooling means 35 for an indirect heat exchange, whose cooling fluid, e.g. cooling water, is heated in the cooling means 35 and then supplied through conduit 36 to the heat exchanger 37 in the preheating chamber 31. There, the cooling fluid releases part of its heat to the solids in the fluidized bed disposed there, whereby a very economic utilization of heat is achieved.

To make the feeding of microwaves into a stationary or circulating fluidized bed 3, 3a more efficient and also protect the microwave source 7 against reflected microwave rays, the microwave source 7 in accordance with the invention is disposed outside the stationary or circulating fluidized bed 3, 3a and the fluidized-bed reactors 1, 1a. The microwave radiation is fed into the fluidized-bed reactor 1, 1a through at least one open wave guide 5, the irradiation angle of the microwaves being inclined by an angle of 10° to 50°, preferably 10° to 20°, with respect to the principal axis 11 of the respective fluidized-bed reactor 1, 1 a.

Example (Calcination of gold ore in a circulating fluidized bed)

The following Table indicates typical method parameters for a calcination of gold ore. For comparison, the data are indicated with and without the inventive irradiation of the microwaves. The microwave frequency is about 915 MHz in the indicated example.

| | | without microwave | | with microwave | |
|---|---|---|---|---|---|
| | Unit | Inlet | Outlet | Inlet | Outlet |
| **Diameter of the CFB-reactor** | mm | 200 | | 200 | |
| **of Fig. 2 Installed microwave** | kW | 0 | | 2 | |
| **performance** | kg/h | 150 | | 195 | |
| **Gold ore feed** | °C | 350 | | 250 | |
| **Primary air** | Nm³/h | 30 | | 30 | |
| | kg/h | 0,80 | | 0.77 | |
| **Oil consumption:** | °C | 525 | | 425 | |
| **Secondary air** | Nm³/h | 24 | | 24 | |
| | kg/h | | 140 | | 182 |
| **Melting loss** | | | | | |
| **Calcination gas, total** | Nm³/h | | 58 | | 59 |
| Flow rate Temperature | °C | | 700 | | 600 |
| Composition, dry | Vol-% | | 18.7 | | 23.3 |
| $CO_2$ | vol-% | | 75.3 | | 74.3 |
| $N_2$ | vol-% | | 5.9 | | 2.4 |
| $O_2$ | ppV | | 220 | | 134.1 |
| $SO_2$ | | | | | |

Due to an increase in the flow rate by 30 % with a reduced oil consumption, the plant capacity can be increased particularly with reduced emissions by using microwaves which are irradiated under an angle of inclination of 15°.

**List of Reference Numerals:**

| | |
|---|---|
| 1,1 a | fluidized-bed reactor |
| 1 c | intermediate chamber |
| 2 | conduit |
| 3,3a | fluidized layer, fluidized bed |
| 4 | gas distributor |
| 4a | conduits |
| 4b | distribution chamber |
| 4c | grid |
| 5 | wave guide |
| 6 | conduit, secondary gassing |
| 7 | microwave source |
| 8 | heat exchanger |
| 9 | conduit, gas outlet conduit |
| 10 | discharge conduit |
| 11 | principal axis |
| 12 | solids separator |
| 13 | return conduit |
| 14 | discharge conduit |
| 15 | outlet conduit |
| 16 | waste heat boiler |
| 17 | dedusting |
| 18 | duct |
| 19 | weir, partition |
| 20 | opening |
| 21 | weir, partition |
| 31 | antechamber |
| 32 | intermediate chamber |
| 33 | intermediate chamber |
| 34 | cooling chamber |
| 35 | cooling means |
| 36 | conduit |
| 37 | heat exchanger |

**Claims**

1. A method for the thermal treatment of granular solids in a fluidized bed (3, 3a) which is located in a fluidized-bed reactor (1, 1 a), wherein microwave radiation is fed into the fluidized-bed reactor (1, 1 a) through at least one wave guide (5), **characterized in that** the irradiation angle of the microwaves is inclined by an angle of 10° to 50°, in particular 10° to 20°, with respect to the principal axis (11) of the fluidized-bed reactor (1, 1a).

2. The method as claimed in claim 1, **characterized in that** a gas stream is fed into the fluidized-bed reactor (1, 1a) through the same wave guide (5).

3. The method as claimed in claim 2, **characterized in that** the gas stream introduced through the wave guide (5) contains gases which react with the fluidized bed (3, 3a).

4. The method as claimed in claim 2 or 3, **characterized in that** the gas stream introduced through the wave guide (5) is additionally utilized for a fluidization of the fluidized bed (3, 3a).

5. The method as claimed in any of claims 2 to 4, **characterized in that** heat is additionally supplied to the fluidized bed (3, 3a) by the introduced gas stream.

6. The method as claimed in any of claims 2 to 4, **characterized in that** the fluidized bed (3, 3a) is cooled by the introduced gas stream.

7. The method as claimed in any of claims 2 to 6, **characterized in that** by means of the gas stream introduced into the wave guide (5) solid deposits are avoided in the wave guide (5).

8. The method as claimed in any of the preceding claims, **characterized in that** the reactor comprises at least two fluidized-bed reactors (1, 1a), which are separated from each other by weirs or partitions (19, 21) such that solids can move as migrating fluidized-bed from one fluidized-bed reactor (1) into the adjacent fluidized-bed reactor (1a).

9. The method as claimed in any of the preceding claims, **characterized in that** the microwave source (7) is combined with a secondary gassing (6) of a ring conduit and that the wave guide (5) is at the same time used for secondary gassing.

10. The method as claimed in any of the preceding claims, **characterized in that** the used frequency of the microwave radiation is between 300 MHz and 30 GHz, preferably at the frequencies 435 MHz, 915 MHz and 2.45 GHz.

11. The method as claimed in any of the preceding claims, **characterized in that** the temperatures in the fluidized bed (3, 3a) are between 150°C and 1200°C.

12. The method as claimed in any of the preceding claims, **characterized in that** the Particle-Froude-Number Frp in the wave guide (5) is 0.1 to 100, preferably 2 to 30.

13. A plant for the thermal treatment of granular solids in a fluidized bed (3, 3a), in particular for performing the method as claimed in any of claims 1 to 12, comprising a fluidized-bed reactor (1, 1a), a microwave source (7) disposed outside the fluidized-bed reactor (1, 1a) and a wave guide (5) for feeding the microwave radiation into the fluidized-bed reactor (1), **characterized in that** the wave guide (5) is inclined by an angle of 10° to 50°, in particular 10° to 20°, with respect to the principal axis (11) of the fluidized-bed reactor (1, 1a).

14. The plant as claimed in claim 13, **characterized in that** the wave guide (5) has a rectangular or round cross-section, whose dimensions are adjusted in particular to the used frequency of the microwave radiation.

15. The plant as claimed in claim 13 or 14, **characterized in that** the wave guide (5) has a length of 0.1 m to 10 m.

**Patentansprüche**

1. Ein Verfahren zum thermischen Behandeln von körnigen Feststoffen in einem Wirbelbett (3, 3a), welches sich in einem Wirbelschicht-Reaktor (1, 1a) befindet, bei dem Mikrowellenstrahlung durch wenigstens einen Wellenleiter (5) in den Wirbelschicht-Reaktor (1, 1a) eingespeist wird, **dadurch gekennzeichnet, dass** der Einstrahlwinkel der Mikrowellen um einen Winkel von 10° bis 50°, insbesondere 10° bis 20°, zu der Hauptachse (11) des Wirbelschicht-Reaktors (1, 1 a) geneigt ist.

2. Das Verfahren nach Anspruch 1, **dadurch gekennzeichnet, dass** ein Gasstrom durch den selben Wellenleiter (5) in den Wirbelschicht-Reaktor (1, 1a) geleitet wird.

3. Das Verfahren nach Anspruch 2, **dadurch gekennzeichnet, dass** der durch den Wellenleiter (5) eingespeiste Gasstrom mit dem Wirbelbett (3, 3a) reagierende Gase enthält.

4. Das Verfahren nach Anspruch 2 oder 3, **dadurch gekennzeichnet, dass** der durch den Wellenleiter (5) eingespeiste Gasstrom zusätzlich für eine Fluidisierung des Wirbelbetts (3, 3a) genutzt wird.

5. Das Verfahren nach einem der Ansprüche 2 bis 4, **dadurch gekennzeichnet, dass** dem Wirbelbett (3, 3a) durch den eingespeisten Gasstrom zusätzlich Wärme zugeführt wird.

6. Das Verfahren nach einem der Ansprüche 2 bis 4, **dadurch gekennzeichnet, dass** das Wirbelbett (3, 3a) durch den eingespeisten Gasstrom gekühlt wird.

7.  Das Verfahren nach einem der Ansprüche 2 bis 6, **dadurch gekennzeichnet, dass** durch den in den Wellenleiter (5) eingeführten Gasstrom-Feststoff-Ablagerungen in dem Wellenleiter (5) vermieden werden.

8.  Das Verfahren nach einem der vorhergehenden Ansprüche, **dadurch gekennzeichnet, dass** der Reaktor aus mindestens zwei WirbelschichtReaktoren (1, 1a) besteht, die untereinander mit Wehren oder Trennwänden (19, 21) in der Weise abgetrennt sind, dass sich Feststoff als Wanderbett aus einem Wirbelschicht-Reaktor (1) in den benachbarten Wirbelschicht-Reaktor (1a) bewegen kann.

9.  Das Verfahren nach einem der vorhergehenden Ansprüche, **dadurch gekennzeichnet, dass** die Mikrowellen-Quelle (7) mit einer Sekundärbegasung (6) einer Ringleitung kombiniert wird und dass der Wellenleiter (5) gleichzeitig für die Sekundärbegasung verwendet wird.

10. Das Verfahren nach einem der vorhergehenden Ansprüche, **dadurch gekennzeichnet, dass** die verwendete Frequenz der Mikrowellenstrahlung zwischen 300 MHz und 30 GHz liegt, vorzugsweise bei den Frequenzen 435 MHz, 915 MHz und 2,45 GHz.

11. Das Verfahren nach einem der vorhergehenden Ansprüche, **dadurch gekennzeichnet, dass** die Temperaturen in dem Wirbelbett (3, 3a) zwischen 150° und 1200°C liegen.

12. Das Verfahren nach einem der vorhergehenden Ansprüche, **dadurch gekennzeichnet, dass** die Particle-Froude-Zahl $Fr_p$ im Wellenleiter (5) 0,1 bis 100, vorzugsweise 2 bis 30, beträgt.

13. Eine Anlage für die thermische Behandlung von körnigen Feststoffen in einem Wirbelbett (3, 3a), insbesondere zur Durchführung des Verfahrens nach einem der Ansprüche 1 bis 12, mit einem Wirbelschicht-Reaktor (1, 1a), einer außerhalb des Wirbelschicht-Reaktors (1, 1a) liegenden Mikrowellen-Quelle (7) und einem Wellenleiter (5) zum Einspeisen der Mirkowellenstrahlung in den Wirbelschichtreaktor (1), **dadurch gekennzeichnet, dass** der Wellenleiter (5) um einen Winkel von 10 bis 50°, insbesondere 10° bis 20°, zu der Hauptachse (11) des Wirbelschichtreaktors (1, 1a) geneigt ist.

14. Die Anlage nach Anspruch 13, **dadurch gekennzeichnet, dass** der Wellenleiter (5) einen rechteckigen oder runden Querschnitt aufweist, dessen Abmessungen insbesondere an die verwendete Frequenz der Mikrowellenstrahlung angepasst sind.

15. Die Anlage nach Anspruch 13 oder 14, **dadurch gekennzeichnet, dass** der Wellenleiter (5) eine Länge von 0,1 m bis 10 m aufweist.


**Revendications**

1.  Procédé pour le traitement thermique des matières solides en grains dans un lit fluidisé (3, 3a) disposé dans un réacteur de lit fluidisé (1, 1a) où de la radiation à micro-ondes est amenée au réacteur de lit fluidisé (1, 1a) par l'intermédiaire d'au moins un guide-ondes (5), **caractérisé en ce que** l'angle d'irradiation des micro-ondes est incliné à 10° à 50°, préférablement à 10° à 20°, relatif à l'axe principal (11) du réacteur de lit fluidisé (1, 1a).

2.  Procédé selon la revendication 1, **caractérisé en ce qu'**un courant de gaz est amené au réacteur de lit fluidisé (1, 1a) par l'intermédiaire du même guide-ondes (5).

3.  Procédé selon la revendication 2, **caractérisé en ce que** le courant de gaz introduit par l'intermédiaire du guide-ondes (5) contient des gazes réagissant avec le lit fluidisé (3, 3a).

4.  Procédé selon les revendications 2 ou 3, **caractérisé en ce que** le courant de gaz introduit par l'intermédiaire du guide-ondes (5) en plus est utilisé pour fluidiser le lit fluidisé (3, 3a).

5.  Procédé selon l'une des revendications 2 à 4, **caractérisé en ce que** du chaud est en plus amenée au lit fluidisé (3, 3a) par l'intermédiaire du courant de gaz introduit.

**6.** Procédé selon l'une des revendications 2 à 4, **caractérisé en ce que** le lit fluidisé (3, 3a) est refroidi par le courant de gaz introduit.

**7.** Procédé selon l'une des revendications 2 à 6, **caractérisé en ce que** le dépôt de matière solide dans le guide-ondes (5) est évité par l'intermédiaire du courant de gaz introduit dans le guide-ondes (5).

**8.** Procédé selon l'une des revendications précédentes, **caractérisé en ce que** le réacteur comporte au moins deux réacteurs de lit fluidisé (1, 1a) séparés l'un de l'autre par l'intermédiaire des barrages ou cloisons (19, 21) de sorte que des matières solides se mouvent comme lit fluidisé migrant d'un réacteur de lit fluidisé (1) dans le réacteur de lit fluidisé (1a) voisin.

**9.** Procédé selon l'une des revendications précédentes, **caractérisé en ce que** la source micro-ondes (7) est combinée avec une conduite de gaz (6) secondaire d'une conduite circulaire, et que le guide-ondes (5) en même temps est utilisé comme conduite de gaz secondaire.

**10.** Procédé selon l'une des revendications précédentes, **caractérisé en ce que** la fréquence de la radiation micro-ondes utilisée se trouve à 300 MHz à 30 GHz, préférablement à 435 MHz, 915 MHZ et 2,45 GHz.

**11.** Procédé selon l'une des revendications précédentes, **caractérisé en ce que** les températures dans le lit fluidisé (3, 3a) se trouvent entre 150°C et 1200°C.

**12.** Procédé selon l'une des revendications précédentes, **caractérisé en ce que** le « Particule-Froude » Numéro Frp dans le guide-ondes (5) se trouve entre 0,1 et 100, préférablement entre 2 et 30.

**13.** Mécanisme pour le traitement thermique des matières solides en grains dans un lit fluidisé (3, 3a), préférablement pour accomplir le procédé selon l'une des revendications 1 à 12, comportant un réacteur de lit fluidisé (1, 1a), une source micro-ondes (7) disposée à l'extérieure du réacteur de lit fluidisé (1, 1a) et un guide-ondes (5) pour amener la radiation de micro-onde dans le réacteur de lit fluidisé (1), **caractérisé en ce que** le guide-ondes (5) est incliné à un angle de 10° à 50°, préférablement de 10° à 20° relatif à l'axe principal (11) du réacteur de lit fluidisé (1, 1a).

**14.** Mécanisme selon la revendication 13, **caractérisé en ce que** le guide-ondes (5) est prévu d'une section rectangulaire ou circulaire, dimensions de laquelle sont ajustées, en particulier, à la fréquence de la radiation micro-ondes utilisée.

**15.** Mécanisme selon les revendications 13 ou 14, **caractérisé en ce que** le guide-ondes (5) a une longueur de 0,1 m à 10 m.

Fig.1

Fig.2

Fig.3

Fig.4

Fig.5